# EUROPÄISCHE PATENTSCHRIFT

(11) **EP 3 755 611 B1**
(45) Veröffentlichungstag und Bekanntmachung des Hinweises auf die Patenterteilung: **17.08.2022**
(21) Anmeldenummer: 19708783.6
(22) Anmeldetag: 14.02.2019
(51) Int. Cl.: B62J 1/26

(54) **FAHRRADSATTEL**
BICYCLE SADDLE
SELLE DE VÉLO

(30) Priorität: 21.02.2018 DE 202018000895 U
(43) Veröffentlichungstag der Anmeldung: 30.12.2020
(73) Patentinhaber: Ergon International GmbH, 56070 Koblenz (DE)
(72) Erfinder: KRAUSE, Andreas, 56068 Koblenz (DE); ARNOLD, Franc, 56068 Koblenz (DE)
(74) Vertreter: dompatent von Kreisler Selting Werner - Partnerschaft von Patent- und Rechtsanwälten mbB
(86) Internationale Anmeldenummer: PCT/EP2019/053728
(87) Internationale Veröffentlichungsnummer: WO 2019/162195

(56) Entgegenhaltungen:
- EP-A2- 1 512 617
- DE-U1-202015 005 873
- DE-U1-202016 105 726
- DE-U1-202017 004 704

## Beschreibung

Die Erfindung betrifft einen Fahrradsattel.

Fahrradsättel weisen eine Sattelschale auf, an deren Unterseite üblicherweise ein Sattelgestell zur Verbindung mit einer Sattelstütze vorgesehen ist. An der Oberseite der Sattelschale ist ein Sattelpolster vorgesehen. Das Sattelpolster kann aus mehreren Polsterelementen zusammengesetzt sein. Dies ist beispielsweise zur Ausbildung von Bereichen mit unterschiedlichen Eigenschaften wie unterschiedlicher Härte, unterschiedlicher Rebound-Eigenschaft etc. vorteilhaft. Das Vorsehen mehrerer Polsterelemente weist jedoch den Nachteil auf, dass die Verbindung der Polsterelemente insbesondere wenn es sich um Polsterelemente aus unterschiedlichen Materialien handelt, nicht zuverlässig ist.

Aus DE 20 2015 005 873 ist ein spezieller Fahrradsattel bekannt. Dieser weist eine Doppel-Sattelschale auf. Zusätzlich zu einer unteren Sattelschale, die mit dem Sattelgestell verbunden ist, ist zwischen zwei Polsterelementen eine weitere Sattelschale aus hartem Kunststoffmaterial vorgesehen. Hierdurch ist ein Bewegen der oberen Sattelschale relativ zur unteren Sattelschale möglich, da zwischen den beiden Sattelschalen ein Polstermaterial oder ein anderer elastomerer Körper angeordnet ist. Wenngleich mit einem derartigen Fahrradsattel der Sitzkomfort erheblich verbessert werden kann, handelt es sich hierbei um eine relativ aufwendige Konstruktion.

Aus EP 1512617 ist ein Fahrradsattel bekannt, bei dem auf der Oberseite einer Sattelschale als erstes Polsterelement ein Abstandsgewirk zur besseren Belüftung angeordnet ist. Auf der Oberseite des Abstandsgewirks kann ein zweites Polsterelement vorgesehen sein, wobei zwischen den beiden Polsterelementen eine Kunststofffolie als Feuchtigkeitssperre angeordnet ist. Dieses Dokument offenbart die Merkmale der Präambel von Anspruch 1.

Aufgabe der Erfindung ist es einen Fahrradsattel zu schaffen, bei dem die Verbindung mehrerer Polsterelemente eines Sattelpolsters verbessert ist.

Die Lösung der Aufgabe erfolgt erfindungsgemäß durch einen Fahrradsattel gemäß Anspruch 1.

Der erfindungsgemäße Fahrradsattel weist eine Sattelschale auf, an deren Unterseite ein Sattelgestell oder eine entsprechende Verbindung zwischen der Sattelschale und dem Sattelstützrohr vorgesehen ist. An der Oberseite der Sattelschale ist ein Sattelpolster angeordnet. Das Sattelpolster weist erfindungsgemäß mindestens zwei Polsterelemente auf. Die Polsterelemente können unterschiedliche Dämpfungseigenschaften, unterschiedliche Rebound-Eigenschaften, unterschiedliche Härten und dergleichen aufweisen. Die Polsterelemente sind derart angeordnet bzw. ausgebildet, dass sie sich zumindest teilweise überdecken. Erfindungsgemäß ist zwischen zumindest zwei Polsterelementen eine Verbindungsschicht vorgesehen. Die Verbindungsschicht ist in besonders bevorzugter Ausführungsform derart ausgestaltet, dass es sich um ein nicht-selbsttragendes Bauteil handelt. Dies kann insbesondere durch die Formgestaltung, die Materialwahl sowie die Dicke des Materials erzielt werden. Hierdurch ist gewährleistet, dass auch bei den während des Fahrens auftretenden Querkräften eine zuverlässige Verbindung zwischen den beiden Polsterelementen aufrechterhalten bleibt.

Vorzugsweise weist die Verbindungsschicht eine Folie und/oder ein Flies auf. Bevorzugt ist es hierbei des Weiteren, dass die Folie und/oder das Flies Ausnehmungen aufweisen. Insbesondere handelt es sich um eine gelochte Folie oder ein gelochtes Flies. Das Vorsehen von Ausnehmungen hat den Vorteil, dass je nach Herstellungsverfahren, das Material eines der beiden Polsterelemente in diese Ausnehmungen eindringt, bzw. die Verbindungsschicht durchdringt, sodass die Verbindung zwischen der Verbindungsschicht und dem entsprechenden Polsterelement verbessert ist. Dies ist insbesondere derart möglich, dass beim Herstellen des entsprechenden Polsterelements die Verbindungsschicht bereits mit vorgesehen ist, beispielsweise in eine Spritzgussform oder eine andere Form eingelegt ist.

Insbesondere ist es bevorzugt, dass die Verbindungsschicht synthetisches und/oder organisches Gewebe aufweist und vorzugsweise aus synthetischem und/oder organischem Gewebe hergestellt ist. Das Verwenden eines Gewebes als Verbindungsschicht hat insbesondere den Vorteil, dass das Polstermaterial auf Grund der Struktur in das Gewebe und der Struktur der Verbindungsschicht als Gewebeschicht in das Gewebe eindringt und somit eine feste Verbindung zwischen zumindest einem der beiden Polsterelemente und der Verbindungsschicht auf einfache Weise realisiert ist. Gegebenenfalls ist auch die Verwendung von Verbindungsschichten zweckmäßig die aus einer Kombination von Gewebe und/oder Flies und/oder Folie hergestellt sind.

Besonders bevorzugt ist es, dass die Verbindungsschicht eine geringe Dicke von insbesondere weniger als 1,5 mm und besonders bevorzugt weniger als 1mm aufweist. Besonders bevorzugt ist es, dass die Verbindungsschicht eine Dicke von 0,5 bis 1 mm aufweist.

Ferner ist es möglich, die insbesondere als Folie und/oder Fließ und/oder Gewebe ausgebildete Verbindungsschicht nur in einem Teilbereich anzuordnen. Hierbei ist insbesondere eine Anordnung der Verbindungsschicht im Sitzbereich des Fahrradsattels bevorzugt, da hier insbesondere über die Sitzknochen des Benutzers die größten Kräfte und Momente in den Sattel eingeleitet werden.

Erfindungsgemäß ist die Verbindungsschicht vorgespannt bzw. weist zumindest vorgespannte Teilelemente auf. Durch die Vorspannung kann die Stabilität weiter verbessert werden. Insbesondere erfolgt eine derartige Vorspannung im Sitzbereich des Fahrradsattels. Besonders bevorzugt ist es hierbei, dass die Vorspannung quer zur Sattellängsrichtung erfolgt. Insbesondere ist es möglich, Fasermaterial in der Verbindungsschicht vorzusehen oder die Verbindungsschicht aus Fasermaterial herzustellen und die Fasern zumindest teilweise, insbesondere vollständig, vorzuspannen. Geeignet sind hierfür insbesondere gestrickte Polypropylen-Fasern.

Als Material für die Verbindungsschicht sind insbesondere auch PolyamidGewebe, Polyethylen-Folien oder Polyethylen-Beschichtungen geeignet. Insbesondere kann die Verbindungsschicht auch mehrlagig ausgebildet sein, wobei je Lage unterschiedliche Materialeigenschaften, wie Vorspannungen, Elastizität usw. realisiert werden können. Insbesondere bei mehrlagigen Verbindungsschichten ist es möglich in unterschiedlichen Bereichen des Sattels, wie beispielsweise im Sitzbereich, im Mittelbereich oder im Bereich der Sattelspitze, unterschiedliche Eigenschaften zu verwirklichen. So ist es beispielsweise möglich eine Verbindungsschicht auszugestalten, die im Sitzbereich insbesondere quer zur Sattellängsrichtung vorgespannt ist und im Bereich der Sattelspitze keine oder eine Vorspannung in Längsrichtung aufweist.

Bei einer bevorzugten Weiterbildung der Erfindung ist in einem der beiden Polsterelemente zwischen denen die Verbindungsschicht angeordnet ist oder in beiden Polsterelementen auf die einander zuweisenden Seite, eine Vertiefung vorgesehen. In dieser Vertiefung ist vorzugsweise die Verbindungsschicht angeordnet. Dies hat insbesondere den Vorteil, dass am äußeren Rand ggf. keine Verbindungsschicht vorgesehen ist, sodass eine gute und ggf. optisch einwandfreie Verbindung der beiden Polsterelemente realisiert werden kann.

Das Vorsehen einer Verbindungsschicht zwischen den mindestens zwei Polsterelementen hat ferner den Vorteil, dass bei Polsterelementen, die seitlich über die Sattelschale vorstehen, eine größere Stabilität der Polsterelemente realisiert werden kann, sodass ein großer Überstand von ggf. sogar mehr als 1 cm möglich ist.

Hierbei ist das Vorspannen der Verbindungsschicht, insbesondere in diesem Bereich, d.h. im Bereich des Überstandes besonders bevorzugt.

Bei einer weiteren bevorzugten Ausführungsform ist ein unteres Polsterelement derart ausgebildet, dass es die Oberseite der Sattelschale um mindestens 50%, insbesondere mindestens 70% und besonders bevorzugt vollständig bedeckt. Gegebenenfalls kann ein weiteres d.h. ein drittes oder gar ein viertes Polsterelement vorgesehen sein um die Dämpfungseigenschaften, Rebound-Eigenschaften etc. des Sattelpolsters zu verändern. Dies kann insbesondere für den Bereich der Sitzknochen, im Bereich der Sattelspitze oder anderen besonderen Belastungen ausgesetzten Bereichen vorteilhaft sein. Beispielsweise können als weitere Polsterelemente Gelelemente oder dergleichen vorgesehen sein.

Bei einer weiteren bevorzugten Ausführungsform ist ein oberes Polsterelement derart angeordnet und ausgebildet, dass es das untere Polsterelement zumindest zu 50%, insbesondere mindestens zu 70% vorzugsweise vollständig überdeckt. Auch ist es möglich, dass das untere Polsterelement die Oberseite der Sattelschale nur teilweise überdeckt und sodann das obere Polsterelement derart ausgebildet ist, dass es in Draufsicht die gesamte Oberseite der Sattelschale überdeckt. Es kann insofern Bereiche geben, in denen das Sattelpolster mehrlagig ist, sowie es auch Bereiche geben kann, in denen das Sattelpolster nur einlagig ist. Zumindest in den einlagigen Bereichen ist es bevorzugt, dass die Deckschicht wie üblich an der Unterseite der Sattelschale fixiert wird.

In besonders bevorzugter Ausführungsform ist das insbesondere untere Polsterelement als Elastomerkörper ausgebildet. Insbesondere weist der Elastomerkörper einen offenzelligen oder geschlossenzelligen Schaum auf und ist besonders bevorzugt aus einem derartigen Schaum hergestellt.

Insbesondere sind geschlossenporige Schäume bevorzugt. Besonders bevorzugt ist es, dass insbesondere das untere Polsterelement einen oder mehrere Partikelschäume aufweist und insbesondere aus einem oder mehreren Partikelschäumen hergestellt ist. Als Grundmaterial sind hierbei E-TPU (expandiertes thermoplastisches Polyurethan), EPP (expandiertes Polypropylen), EPS (expandiertes Polysterol), EPE (expandiertes Polyethylen) oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen.

Besonders bevorzugt weist das untere Polsterelement bzw. das Hauptpolsterelement E-TPU (expandiertes thermoplastisches Polyurethan) auf und ist besonders bevorzugt aus diesem Material hergestellt. Besonders geeignet ist hierfür das von der Firma BASF unter dem Produktnamen "Infinergy" hergestellte Material. Verfahren zur Herstellung von E-TPU sind beispielsweise in EP 692510, WO 00/44821, EP 1174459 und EP 1174458 beschrieben. Ferner ist es bevorzugt, das Polsterelement aus EVA (Ethylenvinylacetat) herzustellen, oder das Hauptpolsterelement aus Material herzustellen, das EVA aufweist. Ferner sind als Materialien EPP (expandiertes Polypropylen), TPE (thermoplastisches Elastomer) oder E-TPE (expandiertes thermoplastisches Elastomer), EPS (expandiertes Polystyrol) und EPE (expandiertes Polyethylen) verwendbar. Auch eine Kombination dieser Materialien miteinander oder eine Kombination der Materialien mit anderen Materialien ist möglich, zum Beispiel in einem Mehrschichtaufbau. Insbesondere können auch Mischungen mit Co- oder Terpolymeren eingesetzt werden. Hierdurch können unterschiedliche Dämpfungs- und Bewegungseigenschaften des Elastomer-Körpers erzielt werden. Auch ist es möglich, die entsprechenden Materialien in unterschiedlichen Bereichen stärker zu verdichten, so dass hierdurch die Dämpfungs- und Bewegungseigenschaft beeinflusst werden können.

Ein weiteres gut geeignetes Material zur Ausbildung des insbesondere unteren Polsterelements ist ein Polyester-basiertes PU Material. Besonders geeignet ist hierbei das von der Firma BASF unter dem Markennamen "Elastopan" angebotene Material. Vorzugsweise weist das Polsterelement ein derartiges Material auf oder ist aus diesem hergestellt, wobei es wiederum möglich ist, dieses Material mit anderen beschriebenen Materialien zu kombinieren.

Besonders bevorzugt ist es, dass insbesondere das untere Polsterelement einen oder mehrere Partikelschäume aufweist und insbesondere aus einem oder mehreren Partikelschäumen hergestellt ist. Als Grundmaterial sind hierbei E-TPU (expandiertes Polyurethan), EPP (expandiertes Polypropylen), EPS (expandiertes Polystyrol), EPE (expandiertes Polyethylen) oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen.

Das untere Polsterelement ist vorzugsweise zumindest im Randbereich aus feuchtigkeitsabweisendem Material hergestellt.

Das insbesondere untere Polsterelement weist in besonders bevorzugter Ausführungsform ein Elastizitätsmodul von 0,1 bis 10 MPA, insbesondere 0,1 bis 5 MPA und besonders bevorzugt 0,1 bis 1,0 MPA auf. Das besonders bevorzugte Material "Infinergy E-TPU" weist ein Elastizitätsmodul von 0,1 bis 0,5 MPA auf.

Des Weiteren ist es besonders bevorzugt, dass das insbesondere untere Polsterelement auf Grund seiner geringen Dichte ein geringes Gewicht aufweist. Insbesondere weist der Elastomerkörper eine Dichte von weniger als 1 g/cm³, besonders bevorzugt weniger als 0,5 g/cm³ , und insbesondere weniger als 0,2 g/cm³ auf. Eines der besonders bevorzugten Materialien, das Material Elastil, weist eine Dichte im Bereich von 0,05 bis 0,2 g/cm³ auf.

Das Rebound-Verhalten des insbesondere unteren Polsterelements liegt vorzugsweise im Bereich von mehr als 30%, insbesondere mehr als 40% und besonders bevorzugt mehr als 50%.

Das obere Polsterelement überdeckt das untere Polsterelement zumindest teilweise, vorzugsweise vollständig. Insbesondere bedeckt das obere Polsterelement das untere Polsterelement um mindestens 50%, insbesondere mindestens 70% und besonders bevorzugt vollständig.

Das obere Polsterelement ist vorzugsweise aus einem schäumbaren Material, insbesondere geschäumten Kunststoff hergestellt. Besonders geeignet ist ein PU-Schaum.

Die Sattelschale weist als Material vorzugsweise PP, PA6, der PA12 auf oder ist aus diesem Material hergestellt. Das Elastizitätsmodul der Sattelschale liegt erfindungsgemäß im Bereich von 1000 bis 10000MPA, vorzugsweise im Bereich von 2500 bis 6000 MPA besonders bevorzugt im Bereich von 3000 bis 5000 MPA. Bevorzugt ist die Verwendung von PP (E-Modul: 1100 bis 1450 MPA), PP GF20 (E-Modul ca. 2900 MPA) und/oder PA 6 G 15 (E-Modul 4500 bis 6500 MPA).

Des Weiteren kann die Sattelschale auch aus TPU hergestellt sein. TPU weist insbesondere den Vorteil auf, dass in einer großen Bandbreite unterschiedliche Elastizitätsmodule erzielt werden können. Die Elastizitätsmodule liegen insbesondere zwischen 500-6000 MPA.

Des Weiteren kann die Sattelschale auch aus Kombinationen vorstehende Werkstoffe oder auch in Verbindung mit anderen Werkstoffen hergestellt sein.

Des Weiteren ist es möglich, das Sattelpolster mit einer Deckschicht zu überspannen. Hierbei ist zumindest ein Teil des Sattelpolsters, vorzugsweise das gesamte Sattelpolster zumindest an der Oberseite vollständig von einer Deckschicht überspannt. Das Vorsehen einer derartigen Deckschicht ist dann zweckmäßig oder ggf. sogar erforderlich, wenn eines der beiden Polsterelemente Feuchtigkeit aufnimmt.

Vorzugsweise ist zumindest das untere Polsterelement aus einem feuchtigkeitsabweisenden Material hergestellt, sodass dies nicht von einer Deckschicht überspannt werden muss.

Ein wesentlicher weiterer Vorteil des Vorsehens einer Verbindungsschicht zwischen zwei Polsterelementen besteht darin, dass die Sattelschale schmaler ausgebildet werden kann. Insbesondere sind größere seitliche Überstände von Polsterelementen möglich, da auf Grund der erfindungsgemäßen Verbindungsschicht Querkräfte besser aufgenommen bzw. übertragen werden können.

Nachfolgend wird die Erfindung anhand einer bevorzugten Ausführungsform unter Bezugnahme auf die anliegenden Zeichnungen näher erläutert.

Es zeigen:
- Figur 1: eine schematische Draufsicht eines Fahrradsattels,
- Figur 2: eine schematische Seitenansicht des in Figur 1 dargestellten Fahrradsattels, und

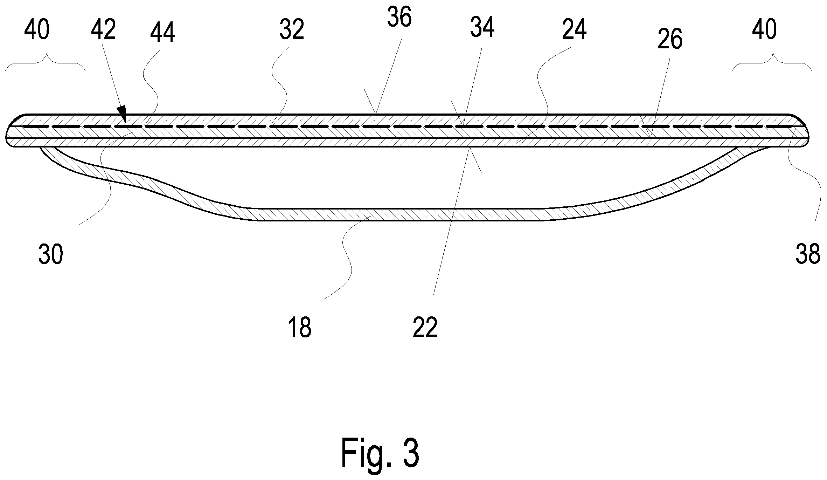

- Figur 3: eine schematische Schnittansicht entlang der Linie III-III in Figur 1.

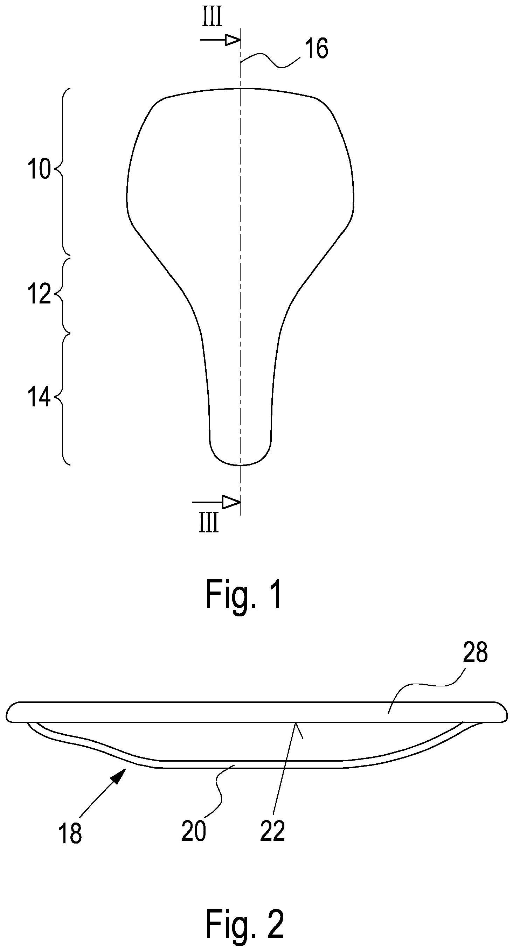

Ein Fahrradsattel weist in Draufsicht (Figur 1) einen Sitzbereich 10 auf, an dem sich ein Mittelbereich 12 anschließt. Der Mittelbereich 12 geht in die Sattelspitze 14 über. Hierbei ist die Sattelspitze 14 schmaler ausgebildet und der Sitzbereich 12 breiter ausgebildet, sodass im Sitzbereich der größte Teil des Gewichts des Fahrrades insbesondere über die Sitzknochen aufgenommen wird. Der Fahrradsattel ist zu einer Mittelachse 16 die in Längsrichtung verläuft symmetrisch ausgebildet.

Eine Unterseite 22 des Fahrradsattels ist mit einem Sattelgestell 18 (Figur 2) verbunden. Die dargestellte Ausführungsform des Sattelgestells 18 weist insbesondere zwei sich im Wesentlichen in Längsrichtung des Sattels erstreckende Streben auf. In einem mittleren Bereich 20 der beiden Streben des Sattelgestells 18 ist dieses über ein Befestigungselement mit der Sattelstütze verbindbar. Selbstverständlich sind auch andere Befestigungen des Sattels mit der Sattelstütze möglich.

Der erfindungsgemäße Sattel weist eine aus relativ steifen Material hergestellte Sattelschale 24 auf, mit deren Unterseite 22 das Sattelgestell 18 verbunden ist. Auf einer Oberseite 26 der Sattelschale 24 ist ein Sattelpolster 28 angeordnet. Im dargestellten Ausführungsbeispiel weist das Sattelpolster 28 ein unteres Polsterelement 30 sowie ein oberes Polsterelement 32 auf. Im dargestellten Ausführungsbeispiel bedeckt das untere Polsterelement 30 die gesamte Oberseite 26 der Sattelschale 24. Des Weiteren bedeckt das obere Polsterelement 32 über die gesamte Fläche eine Oberseite 34 des unteren Polsterelements 30.

Ferner ist eine Oberseite des oberen Polsterelements 32 mit einer Deckschicht 36 überspannt. Der Randbereich 38 der Deckschicht 36 ist im Bereich eines Sattelrandes 40 zwischen den beiden Polsterelementen 30, 32 angeordnet.

Zwischen dem unteren Polsterelement 30 und dem oberen Polsterelement 32 ist eine in dem dargestellten Ausführungsbeispiel als gelochte Folie ausgebildete Verbindungsschicht 42 vorgesehen. Die Verbindungsschicht 42 erstreckt sich über die gesamte Oberseite 34 des unteren Polsterelements 30. Die Verbindungsschicht 42 weist ggf. unregelmäßig angeordnete Ausnehmungen bzw. Löcher 44 auf.

Die Verbindungsschicht 42 wird vorzugsweise mit dem unteren Polsterelement 30 bereits während der Herstellung dieses Polsterelementes verbunden. Beispielsweise wird die Verbindungsschicht in eine entsprechende Form die zur Herstellung des unteren Polsterelements dient, eingelegt. Die Verbindung der Verbindungsschicht 42 mit dem oberen Polsterelement 32 kann durch Wärme, chemische Reaktionen oder dergleichen erfolgen.

## Patentansprüche

1. Fahrradsattel mit
einer Sattelschale (24),
einem an einer Unterseite (22) der Sattelschale (24) angeordneten Sattelgestell und
einem an einer Oberseite (26) der Sattelschale (24) angeordneten Sattelpolster (28),
wobei das Sattelpolster (28) mindestens zwei Polsterelemente (30, 32) aufweist, die sich zumindest teilweise überdecken,
wobei
zwischen zumindest zwei Polsterelementen (30, 32) eine Verbindungsschicht (42) angeordnet ist,
**dadurch gekennzeichnet, dass**
die Verbindungsschicht (42) insbesondere, quer zur Sattellängsrichtung (16), vorgespannt ist.

2. Fahrradsattel nach Anspruch 1 **dadurch gekennzeichnet, dass** die Verbindungsschicht (42) eine Folie und/oder ein Flies aufweist, insbesondere als Folie oder Flies ausgebildet ist.

3. Fahrradsattel nach einem der Ansprüche 1 oder 2 **dadurch gekennzeichnet, dass** die Verbindungsschicht (42) Ausnehmungen (44) aufweist, insbesondere gelocht ist.

4. Fahrradsattel nach einem der Ansprüche 1 bis 3 **dadurch gekennzeichnet, dass** ein unteres Polsterelement (30) der mindestens zwei Polsterelemente (30, 32) an der Oberseite (26) der Sattelschale (24) anliegt, insbesondere die Oberseite (26) der Sattelschale (24) vollständig bedeckt.

5. Fahrradsattel nach einem der Ansprüche 1 bis 3 **dadurch gekennzeichnet, dass** die Verbindungsschicht (42) ausschließlich in einem Sitzbereich (10) angeordnet ist.

6. Fahrradsattel nach einem der Ansprüche 1 bis 5 **dadurch gekennzeichnet, dass** die Verbindungsschicht (42) mehrlagig ausgebildet ist.

7. Fahrradsattel nach einem der Ansprüche 1 bis 6 **dadurch gekennzeichnet, dass** die Verbindungsschicht (42) Fasermaterial aufweist, wobei die Faserrichtung vorzugsweise in Sattellängsrichtung (16) und/oder quer zur Sattellängsrichtung (16) verläuft.

8. Fahrradsattel nach einem der Ansprüche 1 bis 7 **dadurch gekennzeichnet, dass** eine Oberseite zumindest eines der beiden Polsterelemente (30, 32) zwischen denen die Verbindungsschicht (42) angeordnet ist, eine Vertiefung aufweist, in der die Verbindungsschicht (42) angeordnet ist.

9. Fahrradsattel nach einem der Ansprüche 1 bis 8 **dadurch gekennzeichnet, dass** die Verbindungsschicht (42) synthetisches und/oder organisches Gewebe aufweist, insbesondere aus synthetischem und/oder organischem Gewebe hergestellt ist.

10. Fahrradsattel nach Anspruch 9 **dadurch gekennzeichnet, dass** ein oberes Polsterelement (32) der Polsterelemente (30, 32) das untere Polsterelement (30) vollständig bedeckt.

11. Fahrradsattel nach einem der Ansprüche 1 bis 10 **dadurch gekennzeichnet, dass** zumindest eines der Polsterelemente (30, 32) insbesondere das untere Polsterelemente (30) einen Partikelschaum aufweist, insbesondere aus einem Partikelschaum hergestellt ist.

12. Fahrradsattel nach einem der Ansprüche 1 bis 11 **dadurch gekennzeichnet, dass** ein oberes Polsterelement (32) der Polsterelemente (30, 32) an einer Oberseite (34) des unteren Polsterelements (30) anliegt, insbesondere die Oberseite (34) des unteren Polsterelements (30) vollständig bedeckt.

13. Fahrradsattel nach einem der Ansprüche 11 bis 12 **dadurch gekennzeichnet, dass** das obere Polsterelement (32) aufgeschäumtes Material aufweist, insbesondere aus aufgeschäumten Material hergestellt ist.

14. Fahrradsattel nach einem der Ansprüche 1 bis 13 **dadurch gekennzeichnet, dass** das Sattelpolster (28), insbesondere das obere Polsterelement (32) von einer Deckschicht vorzugsweise vollständig überspannt ist.

## Claims

1. Bicycle saddle comprising
a saddle shell (24),
a saddle frame arranged on a lower side (22) of the saddle shell (24), and
a saddle cushion (28) arranged on an upper side (26) of the saddle shell (24),
wherein the saddle cushion (28) comprises at least two cushion elements (30, 32) overlapping each other at least partially,
wherein a connection layer (42) is arranged between at least two cushion elements (30, 32),
**characterized in that**
the connection layer (42) is pre-tensioned in particular transversely to the longitudinal direction (16) of the saddle.

2. Bicycle saddle of claim 1, **characterized in that** the connection laxer (42) comprises a film and/or a non-woven and in particular is a film or a non-woven.

3. Bicycle saddle of claim 1 or 2, **characterized in that** the connection layer (42) comprises recesses (44) and in particular is perforated.

4. Bicycle saddle of one of claims 1 to 3, **characterized in that** a lower cushion element (30) of the at least two cushion elements (30, 32) rests on the upper side (26) of the saddle shell (24) and in particular covers the upper side (26) of the saddle shell (24) completely.

5. Bicycle saddle of one of claims 1 to 3, **characterized in that** the connection layer (42) is arranged exclusively in a sitting region (10).

6. Bicycle saddle of one of claims 1 to 5, **characterized in that** the connection layer (42) is multi-layered.

7. Bicycle saddle of one of claims 1 to 6, **characterized in that** the connection layer (42) comprises fiber material, wherein the fiber orientation preferably extends in the longitudinal direction (16) of the saddle and/or transversely to the longitudinal direction (16) of the saddle.

8. Bicycle saddle of one of claims 1 to 7, **characterized in that** an upper side of at least one of two cushion elements (30, 32) between which the connection layer (42) are arranged, comprises a recess in which the connection layer (42) is arranged.

9. Bicycle saddle of one of claims 1 to 8, **characterized in that** the connection layer (42) comprises synthetic and/or organic fabric and in particular Is made of synthetic and/or organic fabric.

10. Bicycle saddle of claim 0, **characterized in that** an upper cushion element (32) of the cushion elements (30, 32) covers all of the lower cushion element (30).

11. Bicycle saddle of one of claims 1 to 10, **characterized in that** at least one of the cushion elements (30, 32), in particular the lower cushion element (30), comprises a particulate foam and in particular is made of a particulate foam.

12. Bicycle saddle of one of claims 1 to 11, **characterized in that** an upper cushion element (32) of the cushion elements (30, 32) rests on an upper side (34) of the lower cushion element (30) and in particular covers all of the upper side (34) of the lower cushion element (30).

13. Bicycle saddle of one of claims 11 to 12, **characterized in that** the upper cushion element (32) comprises foamed material and in particular is made of foamed material.

14. Bicycle saddle of one of claims 1 to 13, **characterized in that** the saddle cushion (28), in particular the upper cushion element (32), is spanned preferably completely by a cover layer.

## Revendications

1. Selle de bicyclette, comprenant
une coque de selle (24),
une monture de selle agencée sur un côté inférieur (22) de la coque de selle (24) et
un rembourrage de selle (28) agencé sur un côté supérieur (26) de la coque de selle (24),
le rembourrage de selle (28) comprenant au moins deux éléments de rembourrage (30, 32) qui se recouvrent au moins partiellement,
une couche de liaison (42) étant agencée entre au moins deux éléments de rembourrage (30, 32),
**caractérisée en ce que** la couche de liaison (42) est précontrainte en particulier transversalement à la direction longitudinale de selle (16).

2. Selle de bicyclette selon la revendication 1, **caractérisée en ce que** la couche de liaison (42) comprend une feuille et/ou un carreau, en particulier est réalisée sous la forme d'une feuille ou d'un carreau.

3. Selle de bicyclette selon l'une quelconque des revendications 1 ou 2, **caractérisée en ce que** la couche de liaison (42) comprend des évidements (44), en particulier est perforée.

4. Selle de bicyclette selon l'une quelconque des revendications 1 à 3, **caractérisée en ce qu'**un élément de rembourrage inférieur (30) desdits au moins deux éléments de rembourrage (30, 32) est en appui sur le côté supérieur (26) de la coque de selle (24), en particulier recouvre complètement le côté supérieur (26) de la coque de selle (24).

5. Selle de bicyclette selon l'une des revendications 1 à 3, **caractérisée en ce que** la couche de liaison (42) est agencée exclusivement dans une zone d'assise (10).

6. Selle de bicyclette selon l'une quelconque des revendications 1 à 5, **caractérisée en ce que** la couche de liaison (42) est réalisée en plusieurs couches.

7. Selle de bicyclette selon l'une quelconque des revendications 1 à 6, **caractérisée en ce que** la couche de liaison (42) comprend du matériau fibreux, la direction des fibres s'étendant de préférence dans la direction longitudinale de selle (16) et/ou transversalement à la direction longitudinale de selle (16).

8. Selle de bicyclette selon l'une quelconque des revendications 1 à 7, **caractérisée en ce qu'**un côté supérieur d'au moins l'un des deux éléments de rembourrage (30, 32) entre lesquels est agencée la couche de liaison (42), comprend un creux dans lequel est agencée la couche de liaison (42).

9. Selle de bicyclette selon l'une quelconque des revendications 1 à 8, **caractérisée en ce que** la couche de liaison (42) comprend un tissu synthétique et/ou organique, en particulier est fabriquée en un tissu synthétique et/ou organique.

10. Selle de bicyclette selon la revendication 9, **caractérisée en ce qu'**un élément de rembourrage supérieur (32) des éléments de rembourrage (30, 32) recouvre complètement l'élément de rembourrage inférieur (30).

11. Selle de bicyclette selon l'une quelconque des revendications 1 à 10, **caractérisée en ce qu'**au moins l'un des éléments de rembourrage (30, 32), en particulier l'élément de rembourrage inférieur (30), comprend une mousse de particules, en particulier est fabriqué à partir d'une mousse de particules.

12. Selle de bicyclette selon l'une quelconque des revendications 1 à 11, **caractérisée en ce qu'**un élément de rembourrage supérieur (32) des éléments de rembourrage (30, 32) repose sur un côté supérieur (34) de l'élément de rembourrage inférieur (30), en particulier recouvre complètement le côté supérieur (34) de l'élément de rembourrage inférieur (30).

13. Selle de bicyclette selon l'une quelconque des revendications 11 à 12, **caractérisée en ce que** l'élément de rembourrage supérieur (32) comprend un matériau expansé, en particulier est fabriqué en un matériau expansé.

14. Selle de bicyclette selon l'une quelconque des revendications 1 à 13, **caractérisée en ce que** le rembourrage de selle (28), en particulier l'élément de rembourrage supérieur (32), est de préférence complètement recouvert par une couche de recouvrement.
